# EUROPÄISCHE PATENTSCHRIFT

(11) **EP 3 402 976 B1**
(45) Veröffentlichungstag und Bekanntmachung des Hinweises auf die Patenterteilung: **10.06.2020**
(21) Anmeldenummer: 17700057.7
(22) Anmeldetag: 04.01.2017
(51) Int. Cl.: F02M 17/04, F02M 17/40, F16J 3/02

(54) **REGELMEMBRAN FÜR MEMBRANVERGASER**
CONTROL DIAPHRAGM FOR DIAPHRAGM CARBURETOR
MEMBRANE DE RÉGULATION POUR CARBURATEUR À MEMBRANE

(30) Priorität: 11.01.2016 CH 382016
(43) Veröffentlichungstag der Anmeldung: 21.11.2018
(73) Patentinhaber: Dätwyler Schweiz AG, 6467 Schattdorf (CH)
(72) Erfinder: HABERLAND, Norbert, 53881 Euskirchen (DE); DIEZ DIAZ, Maria Del Mar, 8807 Freienbach (CH); GISLER, Bruno, 6460 Altdorf (CH)
(74) Vertreter: Schneider Feldmann AG Patent- und Markenanwälte
(86) Internationale Anmeldenummer: PCT/EP2017/050133
(87) Internationale Veröffentlichungsnummer: WO 2017/121668

(56) Entgegenhaltungen:
- EP-A1- 0 396 755
- EP-A1- 1 892 414
- EP-A2- 1 286 040
- WO-A1-2014/018723
- WO-A1-2016/012233
- DE-A1- 3 827 555
- DE-A1- 10 142 247
- FR-A- 1 328 068
- FR-A1- 2 418 352
- US-A- 4 837 068

## Beschreibung

### Technisches Gebiet

Die Erfindung betrifft eine Regelmembran zur Regelung einer Kraftstoffzufuhr in einem Membranvergaser eines Verbrennungsmotors.

### Technischer Hintergrund

Membranvergaser werden hauptsächlich in Handgeräten, wie z.B. Motorsägen, oder in Modelflugzeugen verwendet, die jeweils lageunabhängig funktionieren müssen. Bekannte Regelmembranen sind aus gewebeverstärktem Gummi gefertigt (z.B. DE202005020877U1) und weisen mittig in einem zentralen Abtastbereich eine angenietete kreisförmige Versteifungsplatte auf (z.B. EP0608490 und US9027910). Ein Beispiel einer solchen Regelmembran ist in den Figuren 1 bis 3 gezeigt. Die Regelmembran ist mit einem umlaufenden Befestigungsrand 3 im Vergasergehäuse gehalten und schliesst eine Regelkammer 5 dichtend ab. In der Regelkammer ist ein federbelasteter Reglerhebel 4 angeordnet ist, der im Bereich der Versteifungsplatte 6 gegen den zentralen Abtastbereich 1 der Regelmembran drückt und so einen Membranhub resp. eine axiale Auslenkung des Abtastbereichs 1 abtastet. Die Regelkammer 5 ist mit einem Vergaserraum des Membranvergaser verbunden. Die der Regelkammer abgewandte Seite der Regelmembran ist dem Umgebungsdruck ausgesetzt. Beim Betrieb des Vergasers bewirkt ein im Vergaserraum resp. in der Regelkammer entstehender Unterdruck im Bereich von wenigen Millibar einen Membranhub im Zehntel-Millimeter bis einstelligen Millimeter-Bereich des zentralen Abtastbereichs 1, welcher vom Reglerhebel 4 abgetastet wird, um die Kraftstoffzufuhr zu regeln. Zur Erhöhung des maximalen Membranhubs weist die Regelmembran eine konzentrisch um die Versteifungsplatte 6 umlaufende periphere Sicke 8 auf. Aus EP1286040 ist ein gewebeverstärkte Gummimembran mit angenieteter oder angeklebter

Versteifungsplatte bekannt, welche im Funktionsbereich für einen grösseren Membranhub mindestens zwei umlaufende Sicken aufweist.

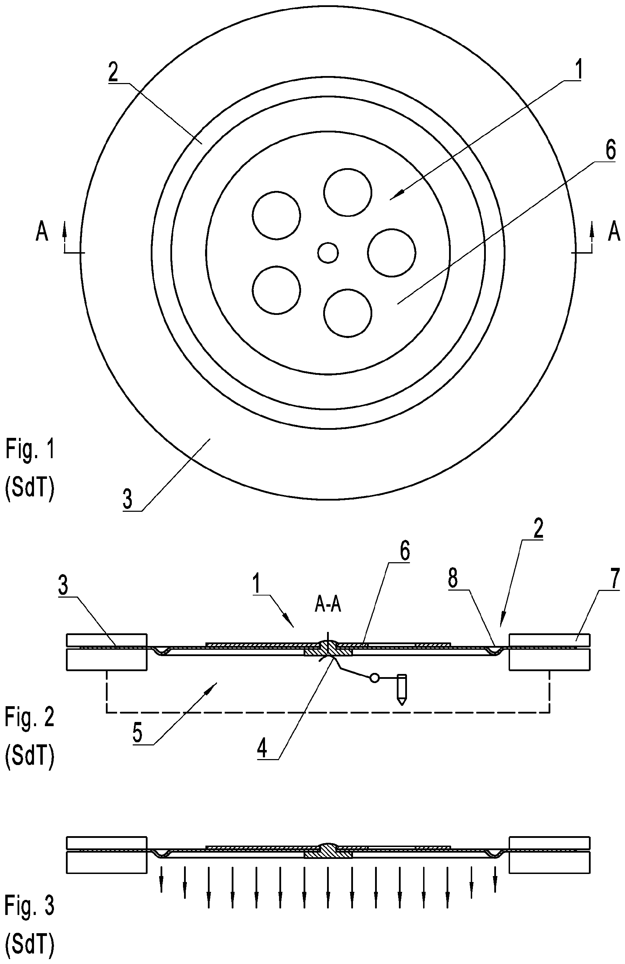

Die angenietete oder angeklebte Versteifungsplatte, welche bei allen bekannten Regelmembranen einen Radius von über 50% des Radius bis zum umlaufenden Befestigungsrand 3 aufweist, versteift einen weitläufigen Innenbereich der Regelmembran. Dabei bewirkt die Versteifungsplatte einen gleichmässigen Membranhub über den durch die Versteifungsplatte abgedeckten Bereich (vgl. Pfeile in Fig. 3). D.h. dieser relativ grosse zentrale Abtastbereich oszilliert in Idealfall gleichmässig in axialer Richtung. Unter realen Bedingungen neigt die Versteifungsplatte 6 allerdings zu einem "Flattern" resp. Taumeln, d.h. die Versteifungsplatte 6 lässt sich leicht aus der Membranebene neigen, insbesondere bei schnellen Lageänderungen des Vergasers, was zu Unregelmässigkeiten der Vergaserregelung während des Betriebs führen kann. Diese lageabhängigen Unregelmässigkeiten werden zudem durch die Masse der Versteifungsplatte 6 erhöht. Die Membran ist häufig auch umgekehrt im Vergaser eingebaut, was aber das "Flattern" resp. Taumeln erhöht.

Ein weiteres Problem der bekannten Regelmembranen besteht darin, dass die Gummibeschichtung während dem Motorbetrieb in Kontakt mit Kraftstoff oder Kraftstoffdämpfen kommt. Dies führt zum Anquellen der Gummischicht. Bei Motorstillstand trocknet die Gummischicht uns schwillt wieder ab. Beide Prozesse finden zufällig statt, beeinflussen aber ebenfalls das Ansprech- und Regelverhalten der Regelmembran. Zudem führt ein häufiges Anquellen und Trocken zu erhöhter Rissbildung in der Gummischicht.

Auch ist die Herstellung einer solchen Regelmembran ein Mehrstufenprozess, in dessen Ergebnis relativ häufig Restspannungen, z.B. aus den verarbeiteten Textil-und Gummimaterialien, in unterschiedlichem Ausmass und zufälliger Verteilung in der Regelmembrane verbleiben. Diese beeinflussen das Regelverhalten in nicht kontrollierbarer Weise. Zudem ist eine Regelmembran mit angenietetem Versteifungselement anfällig auf Undichtheiten und Rissbildung.

Um obige Probleme teilweise zu beheben wurde in DE3827555 eine einteilige Regelmembran aus kraftstoffbeständigem Polytetrafluorethylen (PTFE) vorgeschlagen. Diese weist anstelle der angenieteten Versteifungsplatte ein Versteifungsteil auf, welches entweder direkt an die Regelmembran angeformt oder durch Schweissen oder Kleben mit der Regelmembran verbunden ist. Jedoch weist auch diese Versteifungsplatte einen Radius von weit über 50% des Membranradius auf. Das Problem des "Flatterns" und der lageabhängigen Unregelmässigkeiten wird daher aufgrund der relativ hohen Masse durch die Versteifungsplatte resp. das Versteifungsteil nur unbefriedigend gelöst. Auf dem Markt hat sich diese Lösung nicht durchgesetzt.

Eine weitere Regelmembran ist aus WO2014018723 bekannt. Diese weist einen mehrschichtigen Aufbau mit einer durchgehenden Schicht und einer unterbrochenen Schicht auf. Die durchgehende Schicht schliesst die Regelkammer dichtend ab und reagiert auf den Druckänderungen in der Regelkammer. Die Gesamtflexibilität der mehrschichtigen Regelmembran ist stark abhängig von der Form der unterbrochenen Schicht, die beispielsweise als Spiralfeder ausgestaltet ist. Im zentralen Abtastbereich weist die Regelmembran eine Verstärkungskörper auf. Auch diese Regelmembran ist relativ aufwendig in der Herstellung. Zudem können allfällige Ablagerungen zwischen den beiden Schichten zu Unregelmässigkeiten beim Betrieb des Vergasers führen.

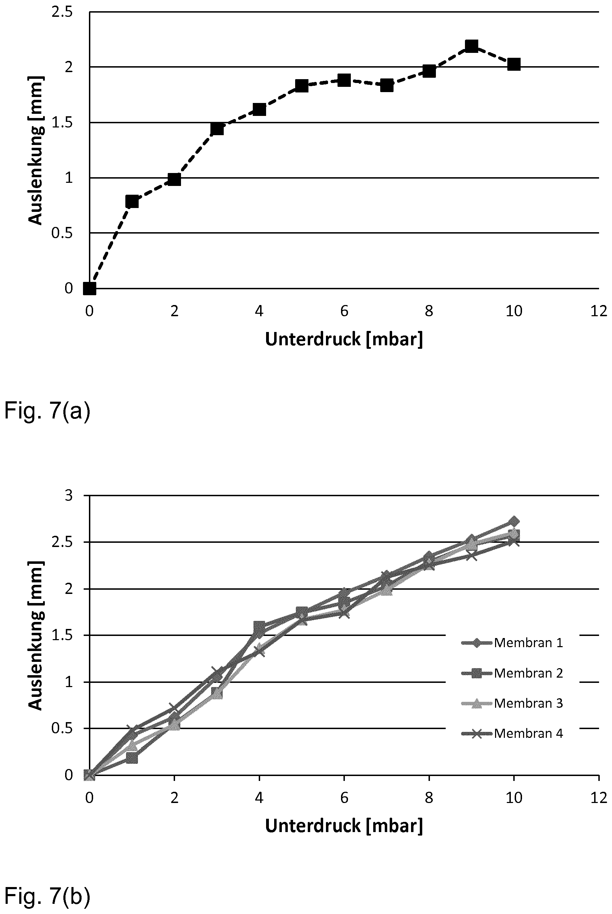

Messungen an einer bekannten Regelmembran aus gummibeschichtetem Gewebe und angenieteter Versteifungsplatte zeigen eine Druck-Weg-Kennlinie (d.h. eine Auslenkung des Abtastbereichs in Abhängigkeit vom Druckunterschied in der Regelkammer), die sich ab einem Unterdruck von ca. 4 Millibar stark abflacht (vgl. Fig. 7(a)). D.h. bei den betriebsbedingten Unterdrücken von 4 bis 8 Millibar ist die Regelempfindlichkeit stark reduziert.

### Darstellung der Erfindung

Eine Aufgabe der Erfindung ist es, eine Regelmembran anzugeben, welche die oben genannten Probleme behebt. Insbesondere sollen die lagenabhängigen Unregelmässigkeiten beim Betrieb des Vergasers verhindert werden. Weiter soll eine möglichst lineare Auslenkung über den gesamten hier auftretenden Unterdruckbereich möglich sein.

Dies wird mit einer Regelmembran mit den Merkmalen des Anspruch 1 erreicht. Die Regelmembran zur Regelung einer Kraftstoffzufuhr in einem Membranvergaser eines Verbrennungsmotors, umfasst einen zentralen Abtastbereich, einen den Abtastbereich konzentrisch umlaufenden Funktionsbereich und eine periphere Befestigungsumrandung zur Befestigung der Regelmembran im Membranvergaser. Im eingebauten Zustand schliesst die Regelmembran eine Regelkammer des Membranvergasers dichtend ab. Über den zentralen Abtastbereich ist die Regelmembran mit einem in der Regelkammer angeordneten Reglerhebel des Membranvergasers in Wirkverbindung, welcher die axiale Auslenkung des Abtastbereichs in Abhängigkeit von einer betriebsbedingten Druckänderung in der Regelkammer abtastet und so die Kraftstoffzufuhr regelt. Die Regelmembran besteht einstückig aus temperartur- und kraftstoffbeständigen, nicht-elastomeren Kunststoff. Der Funktionsbereich ist zwischen Befestigungsumrandung und Abtastbereich durch eine Vielzahl konzentrischer Sicken ausgebildet, wobei die äusserste konzentrischen Sicke direkt an die Befestigungsumrandung angrenzt und der Radius der äussersten konzentrischen Sicke im Wesentlichen dem Radius der Regelkammer entspricht. Der Abtastbereich schliesst direkt an die innerste konzentrische Sicke des Funktionsbereichs an und der Radius des Abtastbereichs beträgt 5 bis 25% des Aussenradius des Funktionsbereichs. Weiter weist der Abtastbereich ein Versteifungsmittel auf, die ein allfälliges Eindrücken des Reglerhebels in den Abtastbereich von sehr dünnen Regelmembranen reduziert.

Der Funktionsbereich definiert den Bereich der Regelmembran, welcher hauptsächlich die Flexibilität und Dehnbarkeit der Regelmembran festlegt. Mit einer Vielzahl konzentrische Verformungen im Funktionsbereich wird die Flexibilität und das Dehnungsvermögen des Kunststoffs derart beeinflusst, dass das Biegeverhalten (Abflachen der Sicken) der Regelmembran gegenüber einer Materialdehnung innerhalb der Membran dominiert. Dies erlaubt sogar eine im Wesentlichen lineare Auslenkung gegenüber der betriebsbedingten Druckänderung in der Regelkammer resp. eine im Wesentlichen lineare Weg-Druck-Kennlinie. Bei den bekannten gummibeschichteten Regelmembranen dominiert die Materialdehnung innerhalb der Membran, sodass die Zunahme der Auslenkung mit zunehmendem Unterdruck stark abnimmt (nicht-lineare Weg-Druck-Kennlinie). Eine annähernd lineare Weg-Druck-Kennlinie ist nicht möglich. In Simulationen hat sich gezeigt, dass durch Variation der Anzahl Sicken und der Sickengeometrie (Wellenlänge, Amplitude) in radialer Richtung das Ansprechverhalten der Regelmembran fast beliebig zwischen einer nicht-lineare Weg-Druck-Kennlinie (Dominanz der Materialdehnung) bis hin zu einer lineare Weg-Druck-Kennlinie (Dominanz des Biegeverhaltens) eingestellt werden kann.

Der Funktionsbereich der Regelmembran erstreckt sich über fast die gesamte Regelkammer und der innere Abtastbereich weist lediglich einen Radius von etwa 5 bis 25% des Radius der Regelkammer auf resp des äusseren Radius des Funktionsbereichs. Bei den bekannten Membranen erstreckt sich der Funktionsbereich lediglich über einen schmalen peripheren Bereich der Membran entlang dem Rand der Regelkammer.

Das Versteifungsmittel im Abtastbereich erstrecken sich also lediglich über einen geringen mittleren Bereich der gesamten Regelmembran, nämlich nur über die inneren 5% bis 25% bezogen auf den äusseren Radius des Funktionsbereichs resp. des Radius der Regelkammer, wodurch die Masse der Regelmembran auch bei einer angeformten Verdickung des Abtastbereichs gegenüber den bekannten Regelmembranen wesentlich verringert werden kann.

Die Versteifungsmittel können durch eine Verdickung des Abtastbereichs ausgebildet sein (angeformtes Versteifungsmittel), wobei die Dicke des Abtastbereichs 2 bis 12 mal, vorzugsweise 4 bis 8 mal, der Membrandicke im Funktionsbereich entspricht. Der Abtastbereich kann eine maximale Dicke von 10 bis 500 Mikrometer, vorzugsweise 20 bis 300 Mikrometer, aufweisen. Die Dicke der Membran im Funktionsbereich kann 5 bis 200 Mikrometer, vorzugsweise 10 bis 50 Mikrometer, aufweisen. Ein solche Verdickung ist insbesondere bei sehr dünnen Regelmembranen vorteilhaft und führt aufgrund des kleinen Abtastbereichs nur zu einer geringen Massenerhöhung.

Die Dicke kann in Abhängigkeit der Form des Reglerhebels gewählt werden. Weist der Reglerhebel eine kleine punktförmige Kontaktfläche auf, so wird der Abtastbereich der Regelmembran dicker gewählt. Weist der Reglerhebel eine tellerförmige Kontaktfläche auf, welche eine grösseren Teil des Abtastbereichs kontaktiert, so kann die Dicke des Abtastbereichs geringer sein.

Die Verdickung kann derart angeordnet sein, dass sich die Regelmembran beim Übergang vom Funktionsbereich in den Abtastbereich in beide Richtungen verdickt, oder sie kann auf der dem Reglerhebel abgewandten oder zugewandten Seite angeordnet sein.

Die gesamte Regelmembran kann aber auch im Wesentlichen gleichmässig dick ausgebildet sein und im Abtastbereich als Versteifungsmittel radiale Versteifungsrippen (angeformte Versteifungsmittel) oder radiale Versteifungssicken (eingeformte Versteifungsmittel) aufweisen. Die Versteifungssicken sind im Unterschied zu den Versteifungsrippen wellenförmige "Einprägungen" wie im Falle der Sicken im Funktionsbereich.

Versteifungsrippen können dabei eine maximale Höhe von 10 bis 500 Mikrometer, vorzugsweise 20 bis 300 Mikrometer, in Bezug auf die Ebene des Abtastbereichs resp. die Membranebene aufweisen. Versteifungssicken können eine maximale Höhe resp. Tiefe von ebenfalls 10 bis 500 Mikrometer, vorzugsweise 20 bis 300 Mikrometer, aufweisen. Diese können ebenfalls auf der dem Reglerhebel abgewandten oder zugewandten Seite angeordnet sein. Ist die dem Reglerhebel zugewandte Seite des Abtastbereichs nicht eben ausgebildet (z.B. im Falle von Versteifungsrippen oder -sicken), so wird eine solche Regelmembran bevorzugt zusammen mit einem Reglerhebel verwendet, welcher einen kreisförmigen, ebenen Abtastteller aufweist. Dabei sind Abtastbereich und Abtastteller bevorzugt aufeinander abgestimmt, so dass der Durchmesser des Abtasttellers 50 bis 100% des Durchmessers des Abtastbereichs entspricht.

In einigen Ausführungsformen sind im Funktionsbereich vier bis zehn konzentrische Sicken eingeformt. Die konzentrischen Sicken können als konzentrische Kreise oder konzentrische Mehrecke ausgebildet sein.

In einigen Ausführungsformen können die konzentrischen Sicken im Funktionsbereich mit radialen Verformungen resp. radialen Versteifungsrippen kombiniert sein, die sich bevorzugt nur über die innersten konzentrischen Sicken erstrecken. D.h. im Funktionsbereich können mehrere radiale Versteifungsrippen ausgebildet sein, die bevorzugt am äusseren Rand des Abtastbereichs ansetzen und im Funktionsbereich radial resp. strahlenförmig nach aussen verlaufen. Je nach gewünschter Versteifung kann die Länge und Anzahl der Versteifungsrippen variiert werden. Die Anzahl kann zwischen 3 bis 12 Versteifungsrippen variieren. Gute Ergebnisse wurden mit 6 Versteifungsrippen erreicht. In der Regel erstrecken sich die Versteifungsrippen nur über die innersten, konzentrischen Sicken d.h. bis etwa in die Mitte des Funktionsbereichs. Dabei wird der innere Funktionsbereich gegenüber dem äusseren Funktionsbereich versteift. Die Versteifung bewirkt eine Stabilisierung des Abtastbereichs in Bezug auf unerwünschtes Verkippen. Die Versteifungsrippen sind wie bereits die konzentrischen Sicken in Form von Sicken in die Regelmembran eingeformt. Dabei wird eine Versteifung ohne Erhöhung der Masse erreicht.

In der Regel sind die konzentrischen Sicken in radialer Richtung wellenförmig ausgebildet. Die in radialer Richtung wellenförmig ausgebildeten Sicken können eine Amplitude (von Wellenberg zu Wellental) von 0.2 bis 1.0 Millimeter und/oder eine Wellenlänge von 1.0 bis 2.5 Millimeter aufweisen. In der Regel ist die Wellenlänge und die Amplitude über den gesamten Funktionsbereich konstant. Die Wellenlänge kann aber auch zum zentralen Abtastbereich hin zunehmen und/oder die Amplitude kann zum zentralen Abtastbereich hin abnehmen, um die Flexibilität der Regelmembran zum zentralen Abtastbereich hin zu erhöhen. Zudem kann die Flexibilität durch die Dicke der Regelmembran beeinflusst werden.

Die Regelmembran wird mit deren Befestigungsumrandung in einem Vergaser fixiert, so dass der Abtastbereich und der Funktionsbereich einen aktiven freiliegenden Bereich der Regelmembran definieren, welcher auf Druckänderungen in der Regelkammer reagieren kann.

In einigen Ausführungsformen beträgt der Radius des Abtastbereichs weniger als 20%, vorzugsweise weniger als 15%, des inneren Radius der Befestigungsumrandung (resp. des aktiven Bereichs der Regelmembran) und/oder des äusseren Radius des Funktionsbereichs. In radialer Richtung gesehen erstreckt sich der Funktionsbereich über mindestens 80% des aktiven Bereichs der Regelmembran. Der Radius des zentralen Abtastbereichs kann 1 bis 5 Millimeter betragen. Der innerer Radius des Funktionsbereichs kann 1 bis 5 Millimeter betragen und der äussere Radius des Funktionsbereichs kann 10 bis 30 Millimeter betragen.

In einigen Ausführungsformen besteht die Regelmembran aus einem nicht elastomeren Kunststoff mit einer Temperaturbeständigkeit von mindestens 150°. Der Kunststoff weist vorzugsweise ein E-Modul (DIN EN ISO 527) von mehr als 800 N/mm², weiter vorzugsweise mehr als 2500 N/mm², auf. Der Kunststoff kann ausgewählt sein aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherketon (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT), Polyetheretherketon (PEEK) oder Kombinationen davon. Bevorzugt wird ein chemisch beständiger, insbesondere ein kraftstoffbeständiger Kunststoff gewählt.

Die Regelmembran weist keine oder in Bezug auf die Gesamtmasse nur eine geringe Massenerhöhung im Zentrum auf, was im Betrieb (z.B. in einem Membranvergaser) zu keinen lageabhängigen Unregelmässigkeiten führt. Ein weiterer erheblicher Vorteil besteht in der einfachen Herstellung, da die Regelmembran mittels Thermoformen aus Folienmaterial oder mittels Spritzguss gefertigt werden kann.

Weiter betrifft die Erfindung einen Membranvergaser mit einer erfindungsgemässen Regelmembran und die Verwendung der erfindungsgemässen Regelmembran in einem Membranvergaser.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Aufsicht auf eine bekannte Regelmembran mit angenieteter Versteifungsplatte;
- Fig. 2: eine Schnittdarstellung der Regelmembran aus Fig. 1 im eingebauten Zustand;
- Fig. 3: eine Schnittdarstellung der Regelmembran aus Fig. 1 mit schematischer Darstellung der Auslenkung;
- Fig. 4: eine Aufsicht auf eine erfindungsgemässe Regelmembran;
- Fig. 5: eine Schnittdarstellung der Regelmembran aus Fig. 4 im eingebauten Zustand;
- Fig. 6: eine Schnittdarstellung der Regelmembran aus Fig. 4 mit schematischer Darstellung der Auslenkung;
- Fig. 7: Weg-Druck-Diagramme einer bekannten Regelmembran (Fig. 7(a)) und von erfindungsgemässen Regelmembranen (Fig. 7(b));
- Fig. 8: eine Aufsicht (Fig. 8(a)) und eine perspektivische Ansicht (Fig. 8(b)) einer erfindungsgemässen Regelmembran mit radialen Versteifungsrippen;
- Fig. 9: eine Schnittdarstellung einer Regelmembran mit einseitiger Verdickung;
- Fig. 10: eine Schnittdarstellung einer Regelmembran mit beidseitiger Verdickung; und
- Fig. 11: eine schematische Darstellung dreier Varianten eines radial versteiften Abtastbereichs.

### Wege zur Ausführung der Erfindung

In den Figuren 1 bis 3 ist eine aus dem Stand der Technik bekannte Regelmembran gezeigt. Fig. 1 zeigt die Regelmembran in einer Draufsicht. Fig. 2 zeigt einen Schnittdarstellung der Regelmembran aus Fig. 1 im eingebauten Zustand. Ein Regelkammer und ein Reglerhebel sind schematisch dargestellt.

Die Regelmembran aus einem gummibeschichteten Gewebe weist mittig eine tellerförmige angenietete Versteifungsplatte 6 auf, welche einen zentralen Abtastbereich 1 der Regelmembran bildet. An den Abtastbereich 1 anschliessend weist die Regelmembran weiter einen aus einer umlaufenden peripheren Sicke 8 gebildeten Funktionsbereich 2 auf, welcher von einer Befestigungsumrandung 3 begrenzt ist. Die Regelmembran wird mit der Befestigungsumrandung 3 in Befestigungsmittel 7 eines Membranvergasers gehalten und schliesst eine Regelkammer 5 (strichlierte Linien) dichtend ab. In der Regelkammer 5 ist ein Reglerhebel 4 angeordnet, welche den Membranhub der Regelmembran abtasten kann und so die Kraftstoffzufuhr des Membranvergasers regelt. Wie bereits beschrieben, bewirkt die Versteifungsplatte 6 einen gleichmässigen Membranhub über den durch die Versteifungsplatte abgedeckten Bereich (vgl. Pfeile in Fig. 3). Im Idealfall oszilliert der von der Versteifungsplatte abgedeckte Bereich gleichmässig in axialer Richtung. Unter realen Bedingungen neigt die Versteifungsplatte 6 jedoch zum "Flattern" resp. Taumeln, d.h. die Versteifungsplatte 6 lässt sich leicht aus der Membranebene neigen, insbesondere bei schnellen Lageänderungen des Vergasers, was zu Unregelmässigkeiten der Vergaserregelung während des Betriebs führen kann.

In Fig. 7(a) ist eine Messung der Weg-Druck-Kennlinie der bekannten Membran aus Fig. 1 dargestellt. Ab einer Druckänderung von ca. 4 Millibar flacht sich die Kurve stark ab, so dass die Regelempfindlichkeit ab 4 Millibar Unterdruck stark reduziert ist.

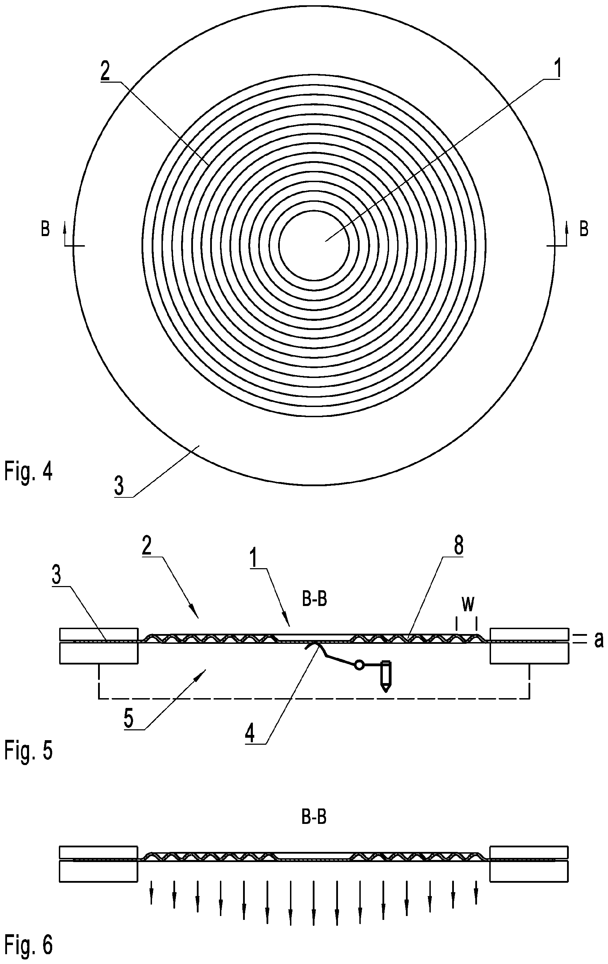

In den Figuren 4 bis 6 ist eine Ausführungsform einer Regelmembran mit einer Vielzahl konzentrischer Sicken gezeigt. Die Regelmembran weist eine Dicke von ca. 20 bis 100 Mikrometer auf. Für die Regelmembran wird ein Kunststoff mit einer Wärmebeständigkeit von mindestens 150°C eingesetzt, ausgewählt aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherkteton (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT), Polyetheretherketon (PEEK) oder Kombinationen davon. Gute Ergebnisse wurde mit einer PEEK-Folie mit einer Dicke von 25 Mikrometer erzielt (vgl. Fig. 7(b)).

Die Regelmembran weist einen Abtastbereich 1, einen Funktionsbereich 2 und eine Befestigungsumrandung 3 auf. Abtastbereich 1 und Funktionsbereich 2 definieren den aktiven freiliegenden Bereich der Regelmembran, welcher aufgrund von Druckänderungen in der Regelkammer 5 ausgelenkt wird. Über die Befestigungsumrandung 3 wird die Regelmembran in Befestigungsmitteln 7 des Vergasers dichtend gehalten. Ein in der Regelkammer 5 angeordneter Reglerhebel 4 tastet die Auslenkung des Abtastbereichs 1 der Regelmembran ab und regelt so die Kraftstoffzufuhr im Vergaser.

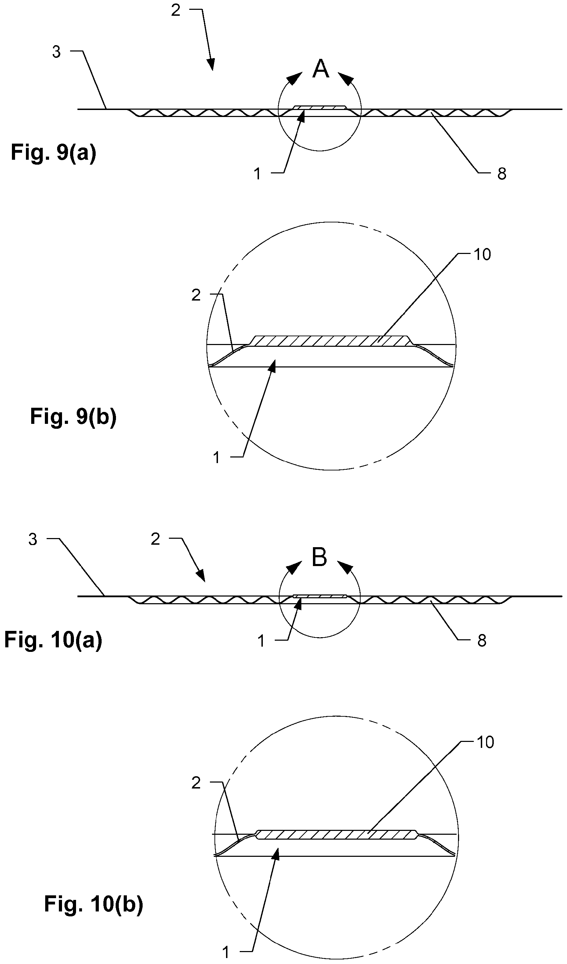

In der gezeigten Ausführungsform weist der Abtastbereich 1 eine Radius von weniger als 20% des Radius des aktiven Bereichs der Regelmembran auf. Der übrige Teil des aktiven Bereichs wird durch den Funktionsbereich 2 ausgebildet. Insbesondere bei einer Ausführungsform bei welcher ein Versteifungsmittel als Verdickung (vgl. Fig. 9 und 10) ausgebildet ist, wird mit dem geringen Radius des Abtastbereichs relativ zum äusseren Radius des Funktionsbereichs resp. des Radius der Regelkammer nur wenig Masse zur Regelmembran hinzugefügt.

In der gezeigten Ausführungsform sind im Funktionsbereich 2 sieben konzentrische, kreisförmige Sicken in die Regelmembran eingeformt. In radialer Richtung sind die konzentrischen Sicken wellenförmig mit konstanter Wellenlänge w und Amplitude a ausgebildet. Die wellenförmigen Sicken erhöhen die Flexibilität und Dehnungseigenschaften der Regelmembran im Funktionsbereich 2. Beim Betrieb des Vergaser bewirkt der erzeugt Unterdruck in der Regelkammer ein Auslenken der Regelmembran, wobei der maximale Membranhub in zentralen Abtastbereich 1 am grössten ist. Der eben ausgebildete Abtastbereich 1 der Regelmembran erfährt hingegen aufgrund der in sich relativ dehnungsfreien Regelmembran und dem Versteifungsmittel kaum eine Krümmung.

Mit den konzentrischen Sicken wird die Flexibilität der Regelmembran derart beeinflusst, dass die maximale Auslenkung kontrolliert auf den zentralen Abtastbereich gelenkt wird, welcher derart klein gewählt ist, dass keine Taumelbewegungen entstehen können - wie sie bei den bekannten Regelmembranen mit steifer oszillierender Platte und einem lediglich peripheren Funktionsbereich vorkommen.

Simulationen haben gezeigt, dass die Steifigkeit der Regelmembran mit zunehmender Amplitude und zunehmender Dicke zunimmt und mit zunehmender Wellenlänge abnimmt. Durch Variation der Anzahl Sicken und der Sickengeometrie (Wellenlänge, Amplitude) in radialer Richtung kann so das Ansprechverhalten der Regelmembran fast beliebig zwischen einer nicht-lineare Weg-Druck-Kennlinie (Dominanz der Materialdehnung) bis hin zu einer lineare Weg-Druck-Kennlinie (Dominanz des Biegeverhaltens) eingestellt werden.

Die Anzahl Sicken und deren Amplituden a und Wellenlängen w können derart gewählt sein, dass die axiale Auslenkung des Abtastbereichs 1 in Abhängigkeit der betriebsbedingten Druckänderung in der Regelkammer 5 im Wesentlichen linear verläuft. Ein Beispiel eines solchen Verlaufs ist in Fig. 7(b) gezeigt. Fig. 7(b) zeigt die Messdaten von vier Regelmembranen, die aus einer PEEK-Folie mit einer Dicke von 25 Mikrometer gefertigt wurden. Der Funktionsbereich 2 weist jeweils sieben kreisförmige Sicken 8 auf, die in radialer Richtung wellenförmig ausgebildet sind. Die Amplitude beträgt etwa 0.44 Millimeter und die Wellenlänge w beträgt etwa 1.6 Millimeter. Der Radius des Abtastbereichs 1 ist etwa 3 Millimeter gross. Der äussere Radius des Funktionsbereichs 2 ist etwa 12.5 Millimeter gross.

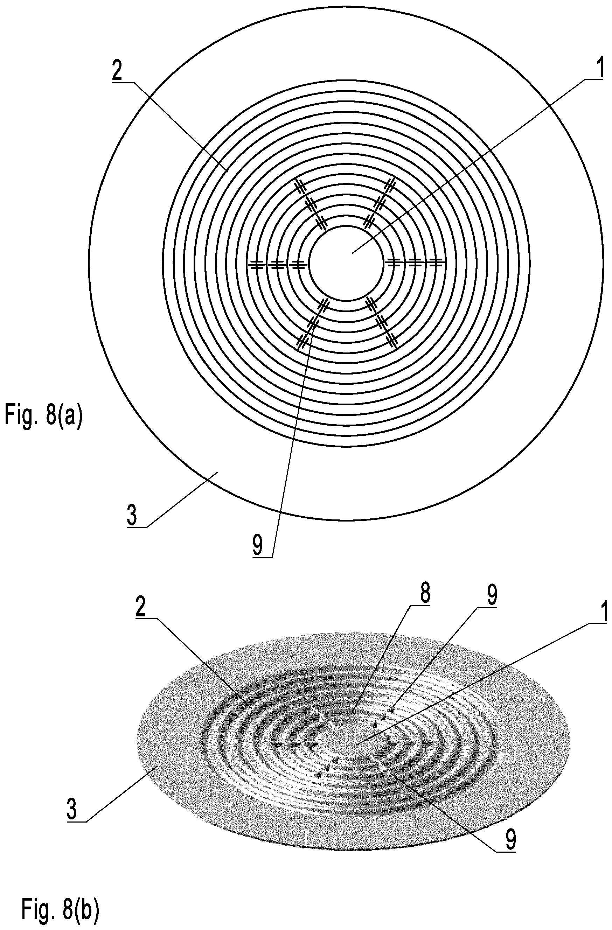

Im Unterschied zu den vorangehend beschriebenen Regelmembranen weist die Regelmembran in Fig. 8(a) und Fig. 8(b) zusätzlich radial Versteifungsrippen 9 auf, welche am äusseren Randbereich des Abtastbereichs 1 ansetzten und radial über die ersten drei konzentrischen Sicken 8 des Funktionsbereichs 2 nach aussen verlaufen. Die Höhe der Versteifungsrippen 9 kann variieren, liegt aber in der Regel in der Ebene des Abtastbereichs 1. Die Versteifungsrippen, welche wie die konzentrischen Sicken in die Regelmembran eingeformt sind, führen zu einer lokalen Versteifung der Membran ohne Erhöhung der Masse. Der Grad der Versteifung kann durch die Anzahl, die Länge, die Breite und die Höhe der Versteifungsrippen beeinflusst werden. Von der dargestellten Seite her gesehen, sind die Versteifungsrippen als Erhöhungen in den Wellentälern ausgebildet. Von der anderen Seite her gesehen sind die Versteifungsrippen als Einschnitte in den Wellenbergen ausgebildet.

In den Figuren 9 und 10 sind zwei Ausführungsarten mit einem als Verdickung 10 ausgestaltetem Versteifungsmittel gezeigt. Figuren 9(a) und 10(a) zeigen einen Schnitt durch die gesamte Membran mit Befestigungsumrandung 3, Funktionsbereich 2 und Abtastbereich 1. Die Figuren 9(b) und 10(b) zeigen jeweils einen vergrösserten Ausschnitt des Abtastbereichs der Regelmembran. Bei Fig. 9 ist das Versteifungsmittel im Abtastbereich als einseitige Verdickung 10 ausgebildet. Diese kann auf der dem Reglerhebel abgewandten oder zugewandten Seite angeordnet sein. Fig. 10 zeigt eine beidseitige Verdickung des Abtastbereichs.

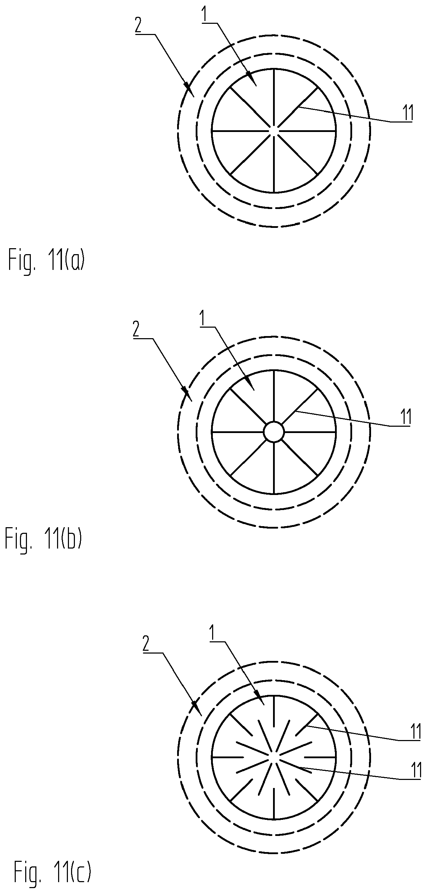

Fig. 11 zeigt eine schematische Darstellung des Abtastbereichs 1 einer Regelmembran mit Versteifungsmittel, die in Form von mehreren radialen Versteifungsrippen (angeformte Versteifungsmittel) oder Versteifungssicken (eingeformte Versteifungsmittel) ausgebildet sind. Unter Fig. 11(a) bis 11(c) sind drei verschieden Anordnungen gezeigt: (a) radiale Versteifungsrippen oder Versteifungssicken, die sich vom Rand des Abtastbereichs bis annähernd ins Zentrum des Abtastbereichs erstrecken; (b) wie (a) mit einer zusätzlichen ringförmigen Rippe oder Sicke im Zentrum; (c) mehrere unterschiedliche lange und zueinander versetzte radiale Versteifungsrippen oder Versteifungssicken - in der gezeigten Variante mit einem inneren und einem äusseren Ring mit jeweils acht Versteifungsrippen resp. -sicken.

In den gezeigten Variante sind jeweils acht resp. sechzehn Versteifungsrippen oder -sicken gezeigt, wobei vorzugsweise mindestens sechs vorhanden sind.

Die Versteifungssicken sind im Unterschied zu den Versteifungsrippen wellenförmige "Einprägungen" wie im Falle der Sicken im Funktionsbereich (eingeformte Versteifungsmittel). Diese können beispielsweise mittels Thermoformverfahren hergestellt werden. In diesem Fall bleibt die Dicke der Regelmembran auch im Abtastbereich im Wesentlichen gleich und es wird. Die Versteifungsrippen sind hingegen lokale Verdickungen der Membran (angeformte Versteifungsmittel).

Versteifungsrippen können dabei eine maximale Höhe von 10 bis 500 Mikrometer, vorzugsweise 20 bis 300 Mikrometer, in Bezug auf die Ebene des Abtastbereichs aufweisen. Versteifungssicken können eine maximale Höhe resp. Tiefe von ebenfalls 10 bis 500 Mikrometer, vorzugsweise 20 bis 300 Mikrometer, aufweisen.

### Bezeichnungsliste

- 1: Abtastbereich
- 2: Funktionsbereich
- 3: Befestigungsumrandung
- 4: Reglerhebel
- 5: Regelkammer
- 6: Versteifungsplatte
- 7: Befestigungsmittel
- 8: konzentrische Sicken
- 9: radiale Versteifungsrippen
- 10: Verdickung
- 11: radial Versteifungsrippen oder Versteifungssicken

## Patentansprüche

1. Regelmembran zur Regelung einer Kraftstoffzufuhr in einem Membranvergaser eines Verbrennungsmotors, umfassend einen zentralen Abtastbereich (1), einen den Abtastbereich (1) konzentrisch umlaufenden Funktionsbereich (2) und eine periphere Befestigungsumrandung (3) zur Befestigung der Regelmembran im Membranvergaser;
wobei die Regelmembran im eingebauten Zustand eine Regelkammer (5) des Membranvergasers dichtend abschliesst und über den zentralen Abtastbereich (1) mit einem in der Regelkammer (5) angeordneten Reglerhebel (4) des Membranvergasers in Wirkverbindung ist, welcher die axiale Auslenkung des Abtastbereichs (1) in Abhängigkeit von einer betriebsbedingten Druckänderung in der Regelkammer (5) abtastet;
**dadurch gekennzeichnet, dass**
die Regelmembran einstückig aus temperartur- und kraftstoffbeständigen, nicht-elastomeren Kunststoff besteht;
dass der Funktionsbereich (2) zwischen Befestigungsumrandung (3) und Abtastbereich (1) durch eine Vielzahl konzentrischer Sicken (8) ausgebildet ist, wobei die äusserste konzentrischen Sicke direkt an die Befestigungsumrandung (3) angrenzt und der Radius der äussersten konzentrischen Sicke im Wesentlichen dem Radius der Regelkammer entspricht;
dass der Abtastbereich (1) direkt an die innerste konzentrische Sicke des Funktionsbereichs (2) anschliesst und der Radius des Abtastbereichs (1) 5 bis 25% des Aussenradius des Funktionsbereichs (2) entspricht; und dass der Abtastbereich (1) ein Versteifungsmittel (10, 11) aufweist.

2. Regelmembran nach Anspruch 1, **dadurch gekennzeichnet, dass** die Versteifungsmittel durch eine Verdickung (10) des Abtastbereichs (1) ausgebildet sind, wobei die Dicke des Abtastbereichs (1) 2 bis 12 mal, vorzugsweise 4 bis 8 mal, der Membrandicke im Funktionsbereich (2) entspricht.

3. Regelmembran nach einem der vorangehenden Ansprüche, **dadurch gekennzeichnet, dass** der Abtastbereich (1) eine maximale Dicke von 10 bis 500 Mikrometer, vorzugsweise 20 bis 300 Mikrometer, aufweist.

4. Regelmembran nach Anspruch 1, **dadurch gekennzeichnet, dass** der Abtastbereich (1) als Versteifungsmittel radiale Versteifungsrippen und/oder Versteifungssicken aufweist.

5. Regelmembran nach Anspruch 5, **dadurch gekennzeichnet, dass** die Versteifungsrippen und/oder Versteifungssicken eine maximale Höhe von 10 bis 500 Mikrometer, vorzugsweise 20 bis 300 Mikrometer, aufweisen.

6. Regelmembran nach einem der vorangehenden Ansprüche, **dadurch gekennzeichnet, dass** die Membran im Funktionsbereich (2) eine Dicke von 5 bis 200 Mikrometer, vorzugsweise 10 bis 50 Mikrometer, aufweist.

7. Regelmembran nach einem der vorangehenden Ansprüche, **dadurch gekennzeichnet, dass** im Funktionsbereich (2) vier bis zehn konzentrische Sicken (8) eingeformt sind.

8. Regelmembran nach einem der vorangehenden Ansprüche, **dadurch gekennzeichnet, dass** die konzentrischen Sicken (8) in radialer Richtung wellenförmig ausgebildet sind und eine Amplitude (a) von 0.2 bis 1.0 Millimeter von Wellenberg zu Wellental und/oder eine Wellenlänge (w) von 1.0 bis 2.5 Millimeter aufweisen.

9. Regelmembran nach Anspruch 7, **dadurch gekennzeichnet, dass** die Wellenlänge (w) zum zentralen Abtastbereich hin zunimmt und/oder die Amplitude (a) zum zentralen Abtastbereich hin abnimmt.

10. Regelmembran nach einem der vorangehenden Ansprüche, **dadurch gekennzeichnet, dass** der Radius des Abtastbereichs weniger als 20%, vorzugsweise weniger als 15%, des äusseren Radius des Funktionsbereichs (2) beträgt.

11. Regelmembran nach einem der vorangehenden Ansprüche, **dadurch gekennzeichnet, dass** der Radius des Abtastbereichs (1) 1 bis 5 Millimeter beträgt und/oder der innerer Radius des Funktionsbereichs (2) 1 bis 5 Millimeter beträgt und der äussere Radius des Funktionsbereichs (2) 10 bis 20 Millimeter beträgt.

12. Regelmembran nach einem der vorangehenden Ansprüche, **dadurch gekennzeichnet, dass** im Funktionsbereich (2) mehrere radiale Versteifungsrippen (9) ausgebildet sind, die sich bevorzugt nur über die innersten konzentrischen Sicken (8) erstrecken.

13. Regelmembran nach einem der vorangehenden Ansprüche, **dadurch gekennzeichnet, dass** die Regelmembran aus einem Kunststoff mit einer Temperaturbeständigkeit von mindestens 150° besteht, ausgewählt aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherkteton (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT), Polyetheretherketon (PEEK) oder Kombinationen davon.

14. Regelmembran nach einem der vorangehenden Ansprüche, **dadurch gekennzeichnet, dass** der Kunststoff eine E-Modul gemessen nach DIN EN ISO 527 von mehr als 800 N/mm², vorzugsweise mehr als 2500 N/mm², aufweist.

15. Membranvergaser mit einer Regelmembran nach einem der vorangehenden Ansprüche.

16. Verwendung einer Regelmembran nach einem der Ansprüche 1 bis 13 als Regelmembran in einem Membranvergaser.

## Claims

1. A control diaphragm for controlling a supply of fuel in a diaphragm carburetor of an internal combustion engine, comprising a central sensing region (1), a functional region (2) enclosing the sensing region (1) concentrically and a peripheral fastening border (3) for fastening the control diaphragm in the diaphragm carburetor;
wherein, in the installed state, the control diaphragm closes a control chamber (5) of the diaphragm carburetor in a sealing manner and is operatively connected via the central sensing region (1) to a control lever (4) of the diaphragm carburetor arranged in the control chamber (5), which control lever senses the axial deflection of the sensing region (1) in a manner which is dependent on an operation-induced pressure change in the control chamber (5);
**characterised in that**
the control diaphragm consists in one piece of temperature-resistant and fuel-resistant, non-elastomeric plastic;
that the functional region (2) is constituted by a multiplicity of concentric corrugations (8) between the fastening border (3) and the sensing region (1), wherein the outermost concentric corrugation directly adjoins the fastening border (3) and the radius of the outermost concentric corrugation essentially corresponds to the radius of the control chamber;
that the sensing region (1) directly adjoins the innermost concentric corrugation of the functional region (2) and the radius of the sensing region (1) corresponds to 5 to 25% of the outer radius of the functional region (2); and
that the sensing region (1) comprises a reinforcing means (10, 11) .

2. The control diaphragm according to claim 1, **characterised in that** the reinforcing means are constituted by a thickening (10) of the sensing region (1), wherein the thickness of the sensing region (1) corresponds to 2 to 12 times, preferably 4 to 8 times, the diaphragm thickness in the functional region (2).

3. The control diaphragm according to any one of the preceding claims, **characterised in that** the sensing region (1) has a maximum thickness of 10 to 500 micrometres, preferably 20 to 300 micrometres.

4. The control diaphragm according to claim 1, **characterised in that** the sensing region (1) comprises radial reinforcing ribs and/or reinforcing corrugations as reinforcing means.

5. The control diaphragm according to claim 5, **characterised in that** the reinforcing ribs and/or reinforcing corrugations have a maximum height of 10 to 500 micrometres, preferably 20 to 300 micrometres.

6. The control diaphragm according to any one of the preceding claims, **characterised in that** the diaphragm in the functional region (2) has a thickness of 5 to 200 micrometres, preferably 10 to 50 micrometres.

7. The control diaphragm according to any one of the preceding claims, **characterised in that** four to ten concentric corrugations (8) are formed in the functional region (2).

8. The control diaphragm according to any one of the preceding claims, **characterised in that** the concentric corrugations (8) are constituted wave-shaped in the radial direction and have an amplitude (a) of 0.2 to 1.0 millimetres from wave crest to wave trough and/or a wavelength (w) of 1.0 to 2.5 millimetres.

9. The control diaphragm according to claim 7, **characterised in that** the wavelength (w) increases towards the central sensing region and/or the amplitude (a) diminishes towards the central sensing region.

10. The control diaphragm according to any one of the preceding claims, **characterised in that** the radius of the sensing region amounts to less than 20%, preferably less than 15%, of the outer radius of the functional region (2).

11. The control diaphragm according to any one of the preceding claims, **characterised in that** the radius of the sensing region (1) amounts to 1 to 5 millimetres and/or the inner radius of the functional region (2) amounts to 1 to 5 millimetres and the outer radius of the functional region (2) amounts to the 10 to 20 millimetres.

12. The control diaphragm according to any one of the preceding claims, **characterised in that** a plurality of radial reinforcing ribs (9) are constituted in the functional region (2), which preferably extend only over the innermost concentric corrugations (8).

13. The control diaphragm according to any one of the preceding claims, **characterised in that** the control diaphragm is made of a plastic with a temperature resistance of at least 150°, selected from the group of polybenzimidazole (PBI), polyimides (PI), thermoplastic polyimides (TPI), polyamide-imide (PAI), polyether sulphone (PES), polyphenyl sulphone (PPSU), polyether imide (PEI), polysulphone (PSU), polyether ketone (PEK), polyaryletherketone (PAEK), polyphenylene sulphide (PPS), perfluoroalkoxy polymer (PFA), ethylene tetrafloroethylene (ETFE), polychlorine trifloroethylene (PCTFE), polyvinylidene fluoride (PVDF), polybutylene terephthalate (PBT), polyetheretherketone (PEEK) or combinations thereof.

14. The control diaphragm according to any one of the preceding claims, **characterised in that** the plastic has a modulus of elasticity measured according to DIN EN ISO 527 of more than 800 N/mm², preferably more than 2500 N/mm².

15. A diaphragm carburetor with a control diaphragm according to any one of the preceding claims.

16. Use of a control diaphragm according to any one of claims 1 to 13 as a control diaphragm in a diaphragm carburetor.

## Revendications

1. Membrane de régulation, destinée à réguler une alimentation de carburant dans un carburateur à membrane d'un moteur à combustion interne, comprenant une zone de balayage (1) centralisée, une zone fonctionnelle (2) entourant de manière concentrique la zone de balayage (1) et une bordure de fixation (3) périphérique, destinée à fixer la membrane de régulation dans le carburateur à membrane ;
en position montée, la membrane de régulation terminant de manière à assurer l'étanchéité une chambre de régulation (5) du carburateur à membrane et se trouvant en liaison active, par l'intermédiaire de la zone de balayage (1) centralisée avec un levier régulateur (4) du carburateur à membrane, placé dans la chambre de régulation (5), lequel balaye la déviation axiale de la zone de balayage (1) en fonction d'une variation de pression liée aux conditions opérationnelles dans la chambre de régulation (5) ;
**caractérisée en ce que**
la membrane de régulation est constituée en monobloc en une matière plastique non élastomère, résistant aux températures et au carburant ;
**en ce que** la zone fonctionnelle (2) est conçue entre la bordure de fixation (3) et la zone de balayage (1) par une pluralité de moulures (8) concentriques, la moulure concentrique placée le plus à l'extérieur étant directement adjacente à la bordure de fixation (3) et le rayon de la moulure concentrique placée le plus à l'extérieur correspondant sensiblement au rayon de la chambre de régulation ;
**en ce que** la zone de balayage (1) se raccorde directement sur la moulure concentrique placée le plus à l'intérieur de la zone fonctionnelle (2) et **en ce que** le rayon de la zone de balayage (1) correspond à de 5 à 25 % du rayon extérieur de la zone fonctionnelle (2) ; et
**en ce que** la zone de balayage (1) comporte un moyen de renfort (10, 11).

2. Membrane de régulation selon la revendication 1, **caractérisée en ce que** le moyen de renfort est conçu par un épaississement (10) de la zone de balayage (1), l'épaisseur de la zone de balayage (1) correspondant à de 2 à 12 fois, de préférence à de 4 à 8 fois l'épaisseur de la membrane dans la zone fonctionnelle (2) .

3. Membrane de régulation selon l'une quelconque des revendications précédentes, **caractérisée en ce que** la zone de balayage (1) présente une épaisseur maximale de 10 à 500 micromètres, de préférence de 20 à 300 micromètres.

4. Membrane de régulation selon la revendication 1, **caractérisée en ce que** la zone de balayage (1) comporte en tant que moyen de renfort des nervures de renfort et/ou des moulures de renfort radiales.

5. Membrane de régulation selon la revendication 5, **caractérisée en ce que** les nervures de renfort et/ou les moulures de renfort présentent une hauteur maximale de 10 à 500 micromètres, de préférence de 20 à 300 micromètres.

6. Membrane de régulation selon l'une quelconque des revendications précédentes, **caractérisée en ce que** dans la zone fonctionnelle (2), la membrane présente une épaisseur de 5 à 200 micromètres, de préférence de 10 à 50 micromètres.

7. Membrane de régulation selon l'une quelconque des revendications précédentes, **caractérisée en ce que** dans la zone fonctionnelle (2) sont façonnées de quatre à dix moulures (8) concentriques.

8. Membrane de régulation selon l'une quelconque des revendications précédentes, **caractérisée en ce que** les moulures (8) sont conçues de forme ondulée dans la direction radiale et présentent une amplitude (a) de 0.2 à 1.0 millimètre, de la crête de l'onde au creux de l'onde et/ou une longueur d'onde (w) de 1.0 à 2.5 millimètres.

9. Membrane de régulation selon la revendication 7, **caractérisée en ce que** la longueur d'onde (w) s'accroît vers la zone de balayage centralisée et/ou **en ce que** l'amplitude (a) décroît vers la zone de balayage centralisée.

10. Membrane de régulation selon l'une quelconque des revendications précédentes, **caractérisée en ce que** le rayon de la zone de balayage s'élève à moins de 20 %, de préférence à moins de 15 % du rayon extérieur de la zone fonctionnelle (2).

11. Membrane de régulation selon l'une quelconque des revendications précédentes, **caractérisée en ce que** le rayon de la zone de balayage (1) s'élève à de 1 à 5 millimètres et/ou **en ce que** le rayon intérieur de la zone fonctionnelle (2) s'élève à de 1 à 5 millimètres et le rayon extérieur de la zone fonctionnelle (2) s'élève à de 10 à 20 millimètres.

12. Membrane de régulation selon l'une quelconque des revendications précédentes, **caractérisée en ce que** dans la zone fonctionnelle (2) sont conçues plusieurs nervures de renfort (9) radiales qui s'étendent de préférence uniquement sur les moulures (8) concentriques placées le plus à l'intérieur.

13. Membrane de régulation selon l'une quelconque des revendications précédentes, **caractérisée en ce que** la membrane de régulation est constituée d'une matière plastique faisant preuve d'une résistance à la chaleur d'au moins 150°, sélectionnée dans le groupe comprenant le polybenzimidazole (PBI), les polyimides (PI), les polyimides thermoplastiques (TPI), le polyamide-imide (PAI), la polyéthersulfone (PES), la polyphénylène-sulfone (PPSU), le polyétherimide (PEI), la polysulfone (PSU), la polyéthercétone (PEK), la polyaryléthercétone (PAEK), le polysulfure de phénylène (PPS), un polymère de perfluoro-alkoxy (PFA), l'éthylène tétrafluoroéthylène (ETFE), le polychlorotrifluoroéthylène (PCTFE), le polyfluorure de vinylidène (PVDF), le polybutylènetéréphtalate (PBT), le polyétheréthercétone (PEEK) ou des associations de ceux-ci.

14. Membrane de régulation selon l'une quelconque des revendications précédentes, **caractérisée en ce que** la matière plastique fait preuve d'un module d'élasticité, mesuré selon la norme DIN EN ISO 527 de plus de 800 N/mm², de préférence de plus de 2500 N/mm2.

15. Carburateur à membrane pourvu d'une membrane de régulation selon l'une quelconque des revendications précédentes.

16. Utilisation d'une membrane de régulation selon l'une quelconque des revendications 1 à 13 en tant que membrane de régulation dans un carburateur à membrane.
